# EUROPEAN PATENT APPLICATION

(11) **EP 4 159 796 A1**
(43) Date of publication of application: **05.04.2023**
(21) Application number: 21382887.4
(22) Date of filing: 01.10.2021
(51) Int. Cl.: C08H 8/00, C08H 99/00, C08L 1/02, C08L 97/02, C08L 99/00, C08L 1/08

(54) **ANTHRAQUINONE AND SILANIZED FUNCTIONALIZED MATERIALS DERIVED FROM OLIVE STONE**

(71) Applicant: Universidad de Almeria, 04120 La Cañada de San Urbano (Almeria) (ES)
(72) Inventor: FERNÁNDEZ DE LAS NIEVES, Ignacio, 04120 Almería (ES); PÉREZ GALERA, Juana María, 04120 Almería (ES); RUIZ MARTÍNEZ, Cristina, 04120 Almería (ES); RUIZ MUELLE, Ana Belén, 04120 Almería (ES)
(74) Representative: Hoffmann Eitle

(57) **Abstract**

The present invention relates to a new anthraquinone and silanized functionalized material useful in potential luminescence and/or catalytic applications and as fillers in the composite manufacturing world.

## Description

### TECHNICAL FIELD

The present invention relates to a new anthraquinone and silanized functionalized material useful in potential luminescence and/or catalytic applications and as fillers in the composite manufacturing world.

### BACKGROUND ART

Olives are the most extensively cultivated fruit crop in the Mediterranean region and specially in South of Spain. They play an important role in the agricultural, industrial, and social activities in the countries where is mainly harvested. Spain is one of the leading olive oil producers in the world and although there are very significant fluctuations in production from one campaign to another, more than 1.3 million tons of olive oil and more than 0.5 tons of table olives were produced in 2019 in Spain. These productions account for about half of all the world's olive oil production and about 21% of that of table olives. However, the oil extraction system generates a large volume of liquid/solid waste which represents a potential environmental pollution challenge. If the solid fraction is considered, then after further extraction and a screening process to separate the dry pulp from the stones, over 15% of a hard-solid residue is generated, approximately 37.500 tons per year. The olive stone is a lignocellulosic material composed of hemicellulose, cellulose, and lignin as the main components.ⁱ This waste is currently used as biomass due to its low N and S percentages,ⁱⁱ activated carbon thanks to its high surface area and its high degree of porosity,ⁱⁱⁱ abrasive materials because its resistance to rupture and deformation,^{iv} in cosmetic due to exfoliation qualities,^{v} and only a few research works reported in the literature have tackled the use of olive stones as a filler in polymer based composite materials.^{vi} The multifunctional group surface and cellulosic backbone of the olive stone prompted us to explore new profitable uses of this waste as a functional material. The hydroxyl groups from the surface are the most abundant and reactive sites of the material which can be used for further functionalization. In this regard, improving the interface compatibility between polymers and lignocellulosic materials has been driven towards the incorporation of malleated polymers^{vii} or its treatment with coupling agents.^{viii} Among the different coupling agents available, bifunctional organosilanes are probably the most widely used.^{ix} These molecules are used to modify the surface of natural or synthetic fibers with their alkoxysilane group, which after hydrolysis are capable of reacting with surfaces rich in OH groups forming chemical bonds with the fibers and with other silane molecules forming siloxane bridges.

### BRIEF DESCRIPTION OF THE DRAWINGS

**Figure 1****.** a) and b) ORTEP and perspective views of ligand **1,** respectively; c) View in the [1 1 0] direction in the packing of ligand **1,** in which are shown stacking interactions and intermolecular hydrogen bonds.
**Figure 2****.** High-resolution XPS scan for the a) C1s, b) O1s, c) N1s, d) Si2p and e) C12p regions of OS@AQ. In dash lines are represented the curves employed in the deconvolution process.
**Figure 3****.** a) and b) Optical microscope images of functionalized olive stone; c), d) and e) Fluorescence microscopy micrographs for AQ-functionalized olive stone.
**Figure 4****.** DSC curves of OS (top curve in dots) and OS@AQ (bottom curve in dots) materials.
**Figure 5****.** N₂ adsorption-desorption isotherms of OS and OS@AQ at 77 K.
**Figure 6****.** a) Moisture absorption M(t) behavior of OS (circles), OS@Silanized (diamonds) and OS@AQ (triangles) as a function of time; b) Initial rate calculation for each material curve.
**Figure 7****.** Zeta potential of OS (light grey), OS@Silanized (grey) and OS@AQ (black) as a function of pH. All the measurements were performed in triplicates with constant conductivity of 650 µS/cm.
**Figure 8****.** Kinetic profile of the reactions with OS and OS@AQ using different equivalents of TMSCN.
**Figure 9****.** Kinetic profile using OS and OS@AQ as catalysts, 2.0 equivalents of TMSCN during three full cycles of recyclability.

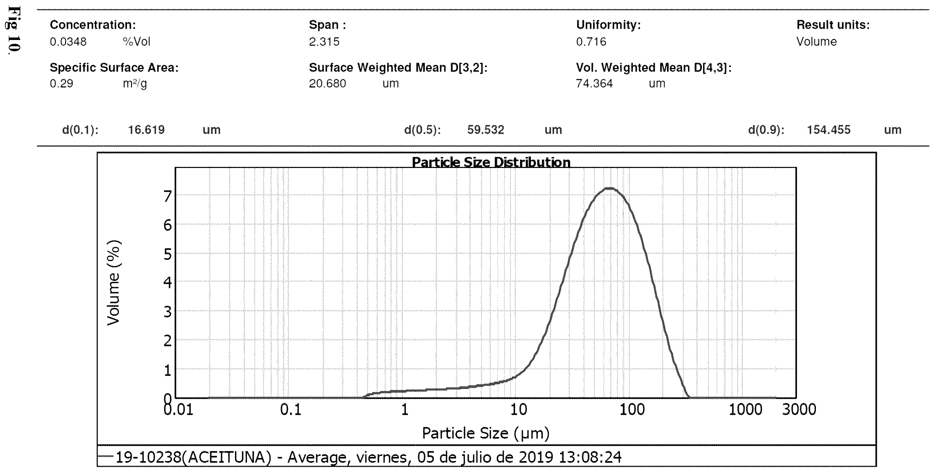

**Figure 10****.** Particle size distribution of native olive stone provided by the Spanish Olive company Grupo Elayo.

### DESCRIPTION OF EMBODIMENTS

### Definitions

In the context of the present invention, the following terms have the meaning detailed below:
- Olive stone is understood as hard-solid residue generated after further extraction and a screening process to separate the dry pulp of olives from the stones obtaining a lignocellulosic material, with hemicellulose, cellulose, and lignin as main components. (Guillermo Rodriguez, Antonio Lama, Rocio Rodriguez, Ana Jiménez, Rafael Guillén, Juan Fernandez-Bolaños Bioresource Technology 99 (2008) 5261-5269)
- Lignocellulosic material derived from olive stone shall be understood as a mixture of natural polymers based on lignin, cellulose, and hemicellulose. (Guillermo Rodriguez, Antonio Lama, Rocio Rodriguez, Ana Jiménez, Rafael Guillén,Juan Fernandez-Bolaños Bioresource Technology 99 (2008) 5261-5269)
- Non-carbonized lignocellulosic material derived from olive stone is understood as hard solid obtained after further extraction and screening process to separate the dry pulp of olives from the stones that is not carbonized in order to obtain microporous activated carbon (Guillermo Rodriguez, Antonio Lama, Rocio Rodriguez, Ana Jiménez, Rafael Guillén, Juan Fernández-Bolaños Bioresource Technology 99 (2008) 5261-5269)
- Silane-functionalized material is understood as solid material that is treated with an organofunctional silane-based compound using a process where the hydroxyl groups on the surface of the material react covalently with the silane.
- Anthraquinone-functionalized material is understood as solid material previously silanized that form covalent bonds with anthraquinone ligands.
- Organofunctional alkoxysilane molecules are understood herein as molecules having general formula (R)ₙ (RO)₄₋ₙ Si, where R is an organofunctional group, and wherein said molecules are understood as hybrid compounds that combine the functionality of a reactive organic group and the inorganic functionality of an alkoxysilane in a single molecule. This special property allows their use as molecular bridges between organic polymers and inorganic materials.
- Silane coupling agents are understood as organic molecules that act as an interface between an inorganic substrate and an organic material. Silicon-based chemicals that contain two types of reactivity - inorganic and organic - in the same molecule and usually have a general structure of (RO)₃ Si CH₂ CH₂ CH₂ X, where RO is a hydrolyzable group, such as methoxy, ethoxy, or acetoxy, and X is an organofunctional group, such as amino, methacryloxy, epoxy, etc. A silane coupling agent will act as an interface between an inorganic substrate (such as glass, metal or mineral) and an organic material (such as an organic polymer, coating or adhesive) to bond, or couple, the two dissimilar materials.
- Organofunctional group is understood as a functional group that is used to functionalize a compound, providing different physical and chemical properties than it would have in its original form.
- Silanization process is understood as a way of functionalization of a material with a silane solution resulting in the formation of a silane monolayer wich act as a coupling agent improving the adhesion to the material. (K. Subramani, in Emerging Nanotechnologies for Manufacturing (Second Edition), 2015)
- Leaving group is understood as molecular fragment that departs with a pair of electrons in heterolytic bond cleavage.
- Tetrasubstituted silanes are understood as silanes having four equal or different substituents groups.
- As used herein R3 SiX is a general formula, where X is an organofunctional group and R is a leaving group. Examples of X can be selected from the group consisting of halogen, aminopropyl, aminoethyl, and examples of R can be selected from the group selected from alkoxy, methyl, and ethyl.
- Carbodiimide, as used herein, is understood as any of a class of compounds having the general formula R N=C=N R', characterized by a carbon atom doubly bonded to two nitrogen atoms each bearing an organic group.
- The term "filler", as used herein, is understood as a solid material that is added to polymers to modificate them, obtaining unique microstructures or macrostructures, resulting on the enhancement of the properties of the material, reduction of costs and improvement and control of the processing characteristics. (Donald G. Baird, in Encyclopedia of Physical Science and Technology (Third Edition), 2003).
- Polymer based composite materials shall be understood as mixtures of polymers with inorganic or organic additives having certain geometries (fibers, flakes, spheres, and particulates). Thus, they consist of two or more components and two or more phases. The additives may be continuous and are embedded in the polymer in regular geometric arrangements that extend throughout the dimensions of the product.
- The dearomatization reaction of naphtols shall be understood as an organic reaction which involves arenes as reactants and in which the reaction products have permanently lost their aromaticity.
- Diels-Alder reaction shall be understood as an addition reaction in which a diene unit with the double or triple bond of an unsaturated compound forms a 6-membered ring. (Merriam-Webster.com Dictionary, Merriam-Webster, https://www.merriam-webster.com/dictionary/Diels-Alder%20reaction. Accessed 16 Sep. 2021)
- Ene-reaction shall be understood as the ene reaction which is defined as the indirect substituting addition of a compound with a double bond (enophile) to an olefin with an allylic hydrogen (ene) https://doi.org/10.1002/anie.196905561)
- Friedel-Crafts reaction shall be understood as an organic coupling reaction involving an electrophilic aromatic substitution that is used for the attachment of substituents to aromatic rings. The two primary types of Friedel-Crafts reactions are the alkylation and acylation reactions.
- Organoboron derivatives shall be understood as boronic acids, borate esters, boranes, and catecholborane derivatives, that can be used either in catalytic or stoichiometric amount. (Santos, A. S., Silva, A. M. S., & Marques, M. M. B. (2020). Sustainable Amidation Reactions - Recent Advances. European Journal of Organic Chemistry. doi: 10.1002/ejoc.202000106).

### Description

In the present invention, olive stone (OS) was used as an effective matrix for silanization and optionally further anchoring of a redox-active probe such as 1-(2-aminoethylamino)-5-chloroanthraquinone (**1**). The silanization process, to obtain a silane-functionalized material according to the invention, was carried out by adding to a stirred suspension of 1g of native olive stone in 50 mL of toluene, APTMS (3-aminopropyltrimethoxysilane) (1.05 mL, 6.01 mmol) and the reaction was stirred at reflux (110°C) during 2h. Then, the reaction was allowed to cool to room temperature, filtered off under vacuum and washed with DCM (10 mL), MeOH (10 mL) and acetone (10 mL). Finally, it was dried in the oven at 60°C for 12 hours obtaining the product that was used in further steps. For further anchoring of a redox-active probe such as 1-(2-aminoethylamino)-5-chloro-anthraquinone, to obtain the anthraquinone-functionalized material according to the invention, to the product of the silanization process, a covalent fixation of an anthraquinoid molecule was achieved first by a grafting to silanization process with 3-aminopropyltrimethoxysilane (APTMS) and second, by an amidation procedure.

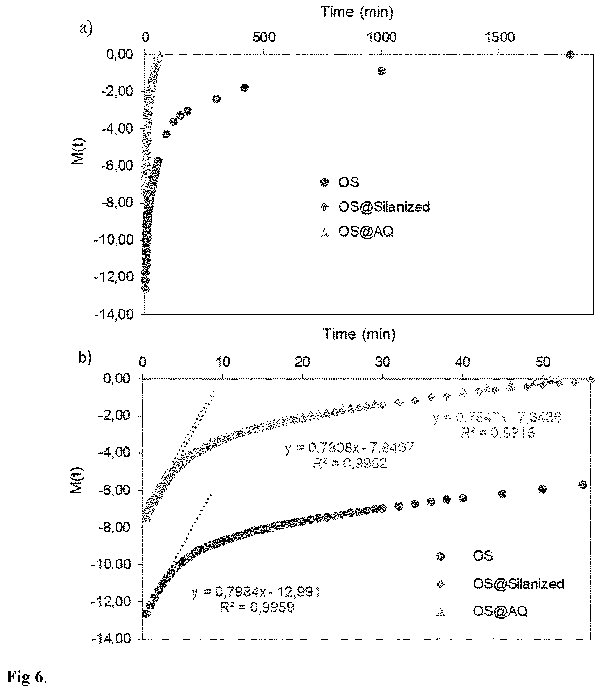

The silanization and further anchoring process of OS presented here is demonstrated herein as a useful strategy to reduce the tendency of this specific lignocellulosic material to capture water, which eventually would affect its mechanical performance as well as its long-term durability. In this sense, water uptake as a function of exposure time is shown in Figure 6 for olive stone as well as for the anthraquinone-functionalized material (OS@AQ) and the silane-functionalized material (OS@Silanized) of the invention. The moisture absorption M(t) expressed as a function of weight gained after being 16 h at 70°C in the oven, is given in Figure 6. In the three materials the content M(t) rapidly increases at the first stage of the absorption and then gradually slowed down until the equilibrium water uptake was reached. The initial rates were in all the cases in the range of 0.75-0.79 s⁻¹ evidencing that the hydration mechanisms of the anhydrous materials are the same fulfilling the micropores, mesopores and surface cavities of the materials in the initial part of the process. As a function of time, it is apparent that in less than an hour the functionalized materials reach their equilibrium state, i.e., 58 min for OS@Silanized and 52 min the OS@AQ, whereas the native OS needed 30 h (1800 min) to reach the original equilibrium state. It is worth mentioning that both silanization and further AQ-functionalization significantly reduced the equilibrium water uptake. Actually, as shown in Figure 6, the maximum water absorption amount decreased from about 12.6% in the native OS to 7.5% or to 7.0% for OS@Silanized and OS@AQ, respectively. These reduced water uptakes associated to the anthraquinone-functionalized material and the silane-functionalized material allow for these materials to serve as redox-active lignocellulosic materials potentially usable in composite materials overcoming all the problems derived from the excess humidity that non-derivatized lignocellulosic material usually have.

It is noted that although it is expected that any derivatization of surface hydroxyl groups into more hydrophobic entities will afford a less percentage of humidity, it is not immediately apparent how the described experimental procedure (110 °C in toluene during 2 to 5 hours) is able of reducing a 5.1% of water after the silanization step and a 5.6% after the amidation process, since it implies that the majority of the micropores and mesopores in the lignocellulosic material have been filled and therefore adequately functionalized. This can be extrapolated to the rest of the processes of silanization herein indicated.

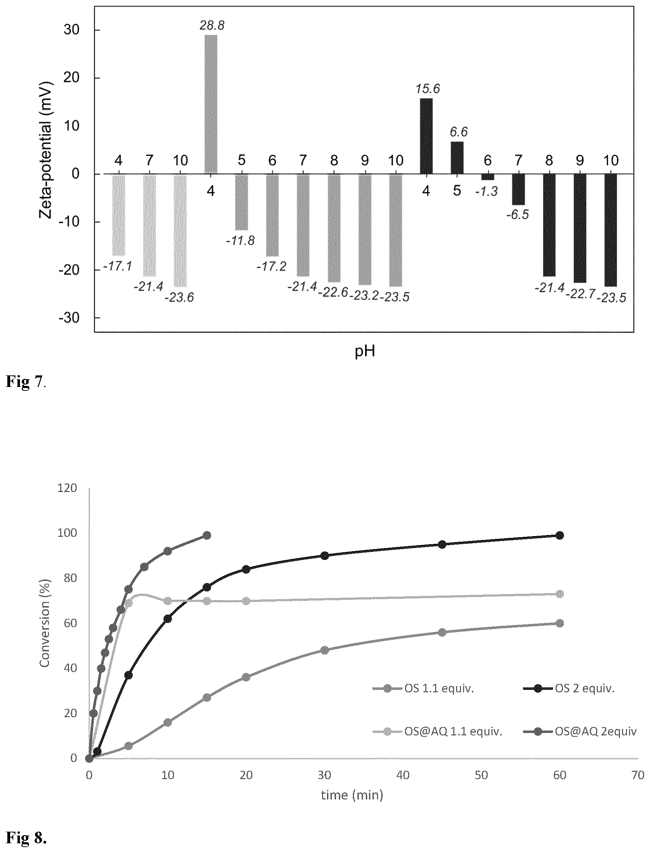

In addition, we report herein the first application of a functionalized olive-stone in the cyanosilylation reaction of benzaldehyde (**2**) (Table 2). The catalytic process was tested without catalyst (entry 1) observing the formation of only 4% of the final product after 15h of reaction. When the native OS was tested as catalyst the conversion afforded was of 74%, indicating that the olive stone surface presents active sites of Lewis acid nature able of catalyzing the process (entry 2). With the antraquinoic ligand anchored on the material and also with the silanized ligand the reaction proceeds with 85% conversion without the use of any solvent (entry 4 of Table 2), suggesting that the functionalization significantly improves the yield of the reaction. Furthermore, the reaction was tested with different solvents (entries 5-9 of Table 2) obtaining worse results than when the reaction was performed without any solvent. Moreover, as shown in the examples, the recyclability of the active materials OS and OS@AQ were studied. On this study, we could observe that after the first cycle, the activity of both systems was greater than the first cycle, i.e. 99% for OS and 92% for OS@AQ, what suggests that the adsorbed water already present before the first cycle could destroy some of the TMSCN employed, and this is why in the second cycle the amount of added TMSCN was enough to perform the reaction explaining the higher conversions. To verify the latter statement, we studied the kinetic profile with 1.1 and 2.0 equivalents of TMSCN for both OS and OS@AQ (Figure 8). As it is observed, within the optimal conditions the reaction proceeds faster when OS@AQ was used as organocatalyst obtaining in only 5 minutes of reaction a 69% of conversion. On the contrary, the native OS required about 60 minutes to afford a 60% of conversion The analysis of the resulting crudes by ¹H NMR spectroscopy showed that no traces of TMSCN remained in the reaction crudes further proving its hydrolysis probably by action of the adsorbed water. When the same kinetic profiles were performed with an excess of 2.0 equivalents of TMSCN, both reactions reached completeness but again, much faster with the functionalized OS than with the native material (Figure 8).

Therefore, the relatively low percentage of water that the anthraquinone and silanized functionalized material are able to adsorb together with their distinct electrophoretic mobility found as a function of pH, makes these new material useful in potential luminescence and/or catalytic applications and opens the door for their use as filler in the composite manufacturing world. These new valorized materials were assayed in the heterogeneous organocatalytic cyanosilylation of carbonyls compounds with excellent yields and high recyclability under both presence and absence of solvent.

Consequently, a first aspect of the invention refers to a process to obtain a silane-functionalized material by a process comprising a) carrying out a silanization process of the hydroxyl groups on the surface of a non-carbonized lignocellulosic material derived from olive stone comprising hemicellulose and lignin, with an organofunctional alkoxysilane molecule. In particular, the silanization process of step a) is carried out by adding the organofunctional alkoxysilane molecule to a lignocellulosic material derived from olive stone, wherein preferably the lignocellulosic material is present in an organic solvent, and optionally cooling, filtering washing, and/or drying so as to obtain the reaction product.

It is noted that the above process can be performed in the presence or absence of a solvent. If a solvent is present, the silanization process could be performed, for example, as illustrated in the examples by stirring a suspension of, for example 1g, of native olive stone in, for example 50 mL, of an organic solvent such as toluene, adding APTMS (3-aminopropyltrimethoxysilane) (for example 1.05 mL, 6.01 mmol) and then stirring the reaction, preferably at reflux during 2h. Then, the reaction can be allowed to cool to room temperature, filtered off under vacuum and washed with DCM (10 mL), MeOH (10 mL) and acetone (10 mL). If a solvent is not used, the process could be performed for example by stirring a suspension of, for example 1g, of native olive stone, adding APTMS (3-aminopropyltrimethoxysilane) (for example 1.05 mL, 6.01 mmol) and stirring the reaction, preferably at 110 °C during 2h. Then, the reaction can be allowed to cool to room temperature, washed with DCM (10 mL), MeOH (10 mL) and acetone (10 mL).

Therefore, in a preferred embodiment of the first aspect of the invention, the silanization process of step a) is carried out, without the presence of a solvent, by adding to a, preferably stirred suspension, of a non-carbonized lignocellulosic material derived from olive stone, an organofunctional alkoxysilane molecule, preferably at a temperature from 20 to 250 °C, preferably in the range of from 100 to 120 °C, and at reaction times from 2 to 24h, preferably in the range of from 8 to 10h, and then preferably allowing the reaction to cool and optionally filtering washing, and/or drying so as to obtain the reaction product.

In another preferred embodiment of the first aspect of the invention, the silanization process of step a) is carried out, in the presence of an organic solvent such as halogenated and non-halogenated organic solvents, preferably toluene, dichloromethane, chloroform, tetrahydrofuran, ethanol, dimethylformamide, and acetonitrile, by adding to, preferably a stirred suspension, of a non-carbonized lignocellulosic material derived from olive stone present in the said organic solvent, an organofunctional alkoxysilane molecule, preferably at a temperature from 20 to 250 °C, more preferably in the range of from 60 to 120 °C, and at reaction times from 2 to 24h, preferably in the range of from 4 to 5h, and then preferably allowing the reaction to cool and optionally filtering washing, and/or drying so as to obtain the reaction product. Preferably, the organic solvents are selected from the list consisting of toluene, dichloromethane, chloroform, tetrahydrofuran, ethanol, dimethylformamide, and acetonitrile; the temperature range is preferably from 60 to 120 °C, and the reaction times are preferably in the range of from 4 to 5h.

It is noted that the organofunctional alkoxysilane molecule indicated in the first aspect of the invention or in any of its preferred embodiments, can be replaced by any silane coupling agents, tetrasubstituted silanes, or R₃SiX, where X is an organofunctional group and R is a leaving group or an organic hydrolysable group. Preferred organofunctional groups can be selected from the list consisting of aminoalkyl, haloalkyl, and heteroatom-based alkyl groups, and preferred leaving groups can be selected from the list consisting of organic hydrolysable groups such as RO, wherein R is a C1-C6 alkyl, preferably RO is a CH3O, CH3CH2O. In addition, preferred organofunctional alkoxysilane molecules can be selected from the group consisting of 3-aminopropyltriethoxysilane (APTES), 3-aminopropylmethyldiethoxysilane (APMDES), 3-aminopropyldimethylethoxysilane (APDMES), 3-Chloropropylmethyldiethoxysilane, Aminoethylaminopropyltriethoxysilane, and Piperazinylpropylmethyldimethoxysilane and derived compounds.

A second aspect of the invention refers to a silane-functionalized material obtained or obtainable by the process of the first aspect of the invention or of any of its preferred embodiments.

A third aspect of the invention refers to a process to obtain an anthraquinone-functionalized material by a process comprising:
b. carrying out an amidation procedure of the silanized material obtained in the first aspect of the invention or of any of its preferred embodiments and forming a covalent fixation of an anthraquinoid molecule to the silanized material obtained after carrying out the amidation procedure, resulting in the anthraquinone-functionalized material.

In a preferred embodiment of the third aspect of the invention, the amidation procedure of step b) is carried out by adding to an organic solvent comprising the anthraquinoid molecule a mixture of a carbodiimide such as *N*-(3-dimethylaminopropyl)-*N'*-ethylcarbodiimide hydrochloride (EDC) and an *N*-hydroxide derivative such as *N*-hydroxysuccinimide (NHS) in a buffered solution, preferably stirring the mixture during 1-2h at room temperature (25ºC), and simultaneously or subsequently adding the silanized material resulting from step a), preferably stirring at room temperature (25ºC) during 16-24h, and optionally filtering, washing and/or drying to obtain the reaction product. Alternative compounds to EDC and NHS suitable to carry out the amidation process can be selected from the list consisting of halo-phosponium reagents, halo-sulfonium reagents, and organoboron derivatives. Preferably, the organic solvents are selected from the list consisting of toluene, dichloromethane, chloroform, tetrahydrofuran, ethanol, dimethylformamide, and acetonitrile.

In another preferred embodiment of the third aspect of the invention or of any of its preferred embodiments, the anthraquinoid molecule is of formula I: 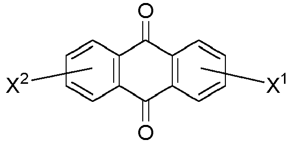 wherein
X1 is from 1 to 4 organics group in any position of the aromatic ring, wherein at least one of these groups has the general formula R' R CO2H, in where R' would be any 5 to 6 atoms heteroatom-based ring containing oxygen, sulphur or nitrogen, and R would be any branched or linear saturated or unsaturated aliphatic chain of length between 2 to 12 carbons, and wherein the rest of the organic groups may be present or absent (in which case a hydrogen would be present in that position) and, if present, may have the formula R' R; and
X2 is from 1 to 4 organics group in any position of the aromatic ring, wherein at least one of these groups has the general formula R' R CO2H, in where R' would be any 5 to 6 atoms heteroatom-based ring containing oxygen, sulphur or nitrogen, and R would be any branched or linear saturated or unsaturated aliphatic chain of length between 2 to 12 carbons, and wherein the rest of the organic groups may be present or absent (in which case a hydrogen would be present in that position) and, if present, may have the formula R' R.

Preferred anthraquinoid molecules are selected from the list consisting of: 4-(9,10-dioxo-9,10-dihydroanthracen-1-yl)butanoic acid, 4,4'-(9,10-dioxo-9,10-dihydroanthracene-1,8-diyl)dibutyric acid, 4,4',4"-(9,10-dioxo-9,10-dihydroanthracene-1,4,5-triyl)tributyric acid, and 4,4′,4ʺ,4‴-(9,10-dioxo-9,10-dihydroanthracene-1,4,5,8-tetrayl)tetrabutyric acid. In yet another preferred embodiment of the third aspect of the invention or of any of its preferred embodiments, the anthraquinoid molecule is 1-(2-aminoethylamino)-5-chloroanthraquinone.

A fourth aspect of the invention refers to the anthraquinone-functionalized material obtained or obtainable by the process of the third aspect of the invention or of any of its preferred embodiments.

A fifth aspect of the invention refers to the use of the anthraquinone-functionalized material according to the fourth aspect of the invention or to the silane-functionalized material according to the second aspect of the invention as a catalyst. In particular, as a Lewis acid catalyst. More particularly, the Lewis acid catalyst is use in luminescence and/or in reactions such as catalytic applications selected from the list consisting of a) dearomatization reaction of naphtols, b) Diels-Alder reaction, c) ene-reaction, d) carbonyl addition reaction, e) Friedel-Crafts reaction.

A sixth aspect of the invention refers to a catalyst, preferably a Lewis acid catalyst, wherein the catalyst is the anthraquinone-functionalized material according to the fourth aspect of the invention or the silane-functionalized material according to the second aspect of the invention.

Lastly, a seventh aspect of the invention refers to the use of the silane-functionalized material according to the second aspect of the invention or the anthraquinone-functionalized material according to the fourth aspect of the invention, as a filler in polymer based composite materials, preferably thermosetting or thermoset materials. Thermosetting is defined as a polymer-based material that becomes solid during the curing action when heated, placed under pressure, or treated with a chemical. The curing process creates a chemical bond that, unlike a thermoplastic, prevents the material from being remelted. Examples of thermosetting are vulcanized rubber, bakelite, duroplast, urea-formaldehyde resins, melamine-formaldehyde resins, epoxy resins, polyimides, silicon resins, cyanate esters, polyurethane, furan resins, vinyl ester resins and polyester resins.

The present invention is additionally explained below by means of examples. This explanation must by no means be interpreted as a limitation of the scope of the invention as it is defined in the claims.

### Examples

### Materials and methods

### Materials

Olive stone (OS) was provided by the Spanish olive company Grupo Elayo located in Castillo de Locubín of Jaen (Spain). The stones were obtained from the separation process of the olive cake with an industrial pitting machine. The solid were milled with an analytical mill (IKA MF-10) and <154 µm fraction was chosen for the characterization and functionalization assays without any pre-treatment.

### Synthesis

*Procedure for the synthesis of 1-(2-aminoethylamino)-5-chloro-anthraquinone* (1). Ligand 1 was synthesized following a modification of the method described by Gibson et al.^{x} The reaction was performed in a multi-gram scale and the recovery of the starting anthraquinone was always achieved. A mixture of 1,5-dichloroanthraquinone (3g, 1 equiv.), 3-aminopropionic acid (1.39 g, 3 equiv.) and triethylamine (4.8 ml, 8 equiv.) in DMSO (60 mL) was stirred at 150 °C in a Schlenk for 3 h under inert N₂ atmosphere. The reaction was poured into ice water and filtered. The filtrate was acidified with 5M HCl (10 mL) and a red solid came out of solution. This precipitate was filtered off and purified by flash column chromatography using dicloromethane:methanol in a ratio 4:1, respectively, to afford a red solid in an overall yield of 32%. The purity of the new anthraquinone derivative was higher than 97% (NMR) and the compound was used without further purification in the next synthetic steps. Mp (⁰C): 180-182. IR (KBr) v (cm⁻¹) 3277 (N-H), 2922 (CH₂), 1697 (C=O), 1669 (C=O), 1626 (C=C), 1591 (C=C), 1571 (C=C), 1259 (C-N), 706 (C-Cl). ¹H NMR (300 MHz, [D₆]DMSO) δ (ppm) 9.52 (t, *J* = 5.0 Hz, 1H, NH), 8.13 (dd, *J=* 7.0, 1.9 Hz, 1H, H6), 7.80-7.70 (m, 2H, H7, H8), 7.60-7.55 (m, 1H, H3), 7.29 (d, *J* = 7.3 Hz, 1H, H4), 7.19 (d, *J* = 8.8 Hz, 1H, H2), 3.55-3.50 (m, 2H, H15), 2.60 (t, *J=* 6.3 Hz, 2H, H16). ¹³C NMR (75 MHz, [D₆]DMSO) δ (ppm) 182.4 (C9), 181.5 (C10), 172.9 (C17), 150.6 (C1), 137.0 (C5), 136.4 (C7), 135.9 (C4), 135.1 (C14), 134.3 (C8), 132.9 (C12), 128.6 (C11), 126.1 (C6), 117.7 (C2), 115.2 (C3), 111.5 (C13), 38.2 (C15), 33.6 (C16). ¹⁵N NMR (30.4 MHz, [D₆]DMSO, via gHMQC) δ (ppm) -314.2. Elemental analysis calcd. for C₁₇H₁₂ClNO₄: C, 61.9; H, 3.7; N, 4.25, found: C, 62.9; H, 4.2; N, 4.01.

*General procedure for the silanization of native olive stone (OS*@*Silanized).* To a stirred suspension of 1g of native olive stone in 50 mL of toluene, was added APTMS (3-aminopropyltrimethoxysilane) (1.05 mL, 6.01 mmol) and the reaction was stirred at reflux during 2h. Then, the reaction was allowed to cool to room temperature, filtered off under vacuum and washed with DCM (10 mL), MeOH (10 mL) and acetone (10 mL). Finally, it was dried in the oven at 60 °C for 12 hours obtaining the product that was used in further steps. Elemental Analysis found: C, 44.72-45.36; H, 6.089-6.186; N, 1.70-1.82.

*General procedure for the amidation of silanized olive stone (OS@AQ).* To a solution of ligand **1** (0.18 mmol, 60 mg) in 4 mL of MeOH, a mixture of *N*-(3-dimethylaminopropyl)-*N'-*ethylcarbodiimide hydrochloride (EDC) (0.27 mmol, 53 mg) and *N*-hydroxysuccinimide (NHS) (0.34 mmol, 38 mg) in 2.8 mL of phosphate-buffered saline (PBS) was added. After 60 minutes stirring at room temperature, the previously silanized olive stone (122 mg) was added and the suspension stirred for 16 hours at room temperature. Then, the solid was filtered off under vacuum and washed with DMSO (5 mL), H₂O (5 mL) and MeOH until the washing waters were colorless. Finally, the solid was dried under vacuum for 3h using a rotary pump. Elemental analysis found: C, 44.27-44.88; H, 5.87-6.14; N, 0.78-0.86.

*General procedure for the cyanosilylation reaction.* In a 1 mL vial with a septum screw capped equipped with a stirring bar, OS@AQ (10 mg, 1.14 mol% of AQ) was weighed. Subsequently, benzaldehyde **2** (0.25 mmol) was added followed by trimethylsilyl cyanide (TMSCN) (34 µL, 0.275 mmol, 1.1 equiv.) and the reaction was stirred under inert N₂ atmosphere at room temperature during the corresponding time. Once the reaction was finished the catalyst was removed by centrifugation (8000 rpm, 3 min) and washed with DCM (2 × 0.5 mL) obtaining the corresponding product **3** after removal of the solvent with rotary evaporator. When not fully conversion was reached the product was purified by column chromatography using hexane as eluent.

### NMR measurements

NMR spectra were measured on a Bruker Avance 300 (¹H, 300.13 MHz; ¹³C, 75.47 MHz) using a 5 mm SmartProbe (BBFO ¹H/BB-¹⁹F). Two-dimensional (gHMQC and gHMBC) correlation spectra were measured on a Bruker Avance 500 spectrometer (¹H, 500 MHz; ¹³C, 125.7 MHz and ¹⁵N, 50.7 MHz) using an inverse TBI ¹H/³¹P/BB. Chemical shifts are given relative to TMS for ¹H and ¹³C, CH₃NO₂ for ¹⁵N. Unless otherwise stated, standard Bruker software routines (TOPSPIN) were used for the 1D and 2D NMR measurements. The ¹H,¹⁵N-gHMQC measurements were carried out using the standard sequence with a delay adjusted to a coupling of 7 Hz (71.4 ms), with 32 scans for each of the 160-*t*₁ increments recorded. The delay between increments was set to 1 s. Chemical shifts are reported in parts per million (ppm) relative to external TMS. Coupling constants are reported in Hertz and multiplicity reported with the usual abbreviations (s: singlet, bs: broad singlet, d: doublet, dd: doublet of doublets, ddd: doublet of doublet of doublets, t: triplet, td: triplet of doublets, q: quartet, dq: doublet of quartet, p: pentet, sex: sextet, hept: heptet, m: multiplet). ¹H NMR determination of product conversions were carried out by comparing signals arising from both CH of aldehyde 2 and cyanosilylated product 3. The standard acquisition parameters were one-dimensional pulse sequence which includes a 30° flip angle (Bruker zg30), recycle time (D1 = 30 s), time domain (TD = 27k), number of scans (NS = 16), acquisition time (AQ = 2.05 s), transmitter (frequency) offset (O1P = 6.0 ppm), and spectral width (SW = 22.0 ppm).

### X-ray studies.

Prismatic red crystal for 1 was mounted on a glass fibre and used for data collection on a Bruker D8 Venture with Photon detector equipped with graphite monochromated *MoKα* radiation (λ=0.71073 Å). The data reduction were performed with the APEX2^{xi} software and corrected for absorption using SADABS.^{xii} Crystal structures were solved by direct methods using the SIR97 program^{xiii} and refined by full-matrix least-squares on *F²* including all reflections using anisotropic displacement parameters by means of the WINGX crystallographic package.^{xiv} Generally, anisotropic temperature factors were assigned to all atoms except for hydrogen atoms, which are riding their parent atoms with an isotropic temperature factor arbitrarily chosen as 1.2 times that of the respective parent. Several crystals of **1** were measured and the structure was solved from the best data we were able to collect, due to the fact that the crystals diffracted very little. Solvent mask routine (implemented in OLEX2 software)^{xv} was used to eliminate one disordered crystallization dichloromethane molecule. Final *R(F), wR*(*F*²) and goodness of fit agreement factors, details on the data collection and analysis can be found in Table S1. CCDC 2076647 contain the supplementary crystallographic data for **1.**

### Organic elemental analysis

The percentages of carbon, hydrogen, nitrogen and sulfur were determined using an EA 1108 CHNS elemental analyzer (Elementar Micro instrument).

### Thermogravimetric (TG) and differential scanning calorimeter (DSC) analysis

The analysis involved heating of 5 mg of ground olive stones under constant nitrogen flow (50 mL/min) with heating rate 10 °C/min using a Mettler Toledo TGA/DSC 1 instrument equipped with a HT1600 oven and a MX5 thermo balance. The thermogravimetric analysis (TGA) plot describes the evolution in the sample mass, the differential thermogravimetric analysis (DTG) plots the decomposition rate in terms of first derivative of the TGA curve, and the DSC graphs evidence endothermic/exothermic processes or changes in heat capacity. The analysis was performed using aluminum crucibles of 70 µL volume.

### Surface area and pore size distribution

Mercury intrusion porosimetry (MIP) was generated using a mercury porosimeter (Autopore IV, Micromeritics). An arbitrary mercury contact angle of 130° and a surface tension of 480 dyn/cm were used to calculate pore size distribution (PSD) data from the mercury intrusion-extrusion curves. The textural properties of OS materials were determined from the nitrogen adsorption isotherms recorded at 77.4 K using an automatic Micrometrics (ASAP 2420 Plus) apparatus in the range of relative pressures from 10⁻⁵ to 1.0. The specific surface area and pore volumes were calculated by applying Brunauer-Emmett-Teller (BET) and DR methods, respectively.

### XPS analysis

XPS was performed with a PHI 5700 X-ray photoelectron spectrometer equipped with a monochromatic Al Kα X-ray source (1486.7 eV) at a takeoff angle of 44° from the film surface. The spectrometer was operated at both high and low resolution with windows pass energies of 23.5 and 187.85 eV, respectively. Electron binging energies were calibrated with respect to the C1s line at 284.6 eV (C-C). The atomic concentrations were estimated by the PHI MultiPak 7.0 software (Physical Electronics) using the standard procedure including the Shirley background subtraction and correction with the corresponding Scofield atomic sensitivity factors, assuming a homogeneous distribution of the atoms to a depth of a few nanometers. Signal deconvolution was performed first by Shirley background subtraction, followed by nonlinear fitting to mixed Gaussian-Lorentzian function (80:20).

### FT-IR spectroscopy analysis

The FT-IR spectra were recorded in the range 400-4000 cm⁻¹ with a Bruker Alpha spectrometer (Alpha II, Bruker Optik, Ettlingen, Germany). Attenuated total reflection (ATR) and diffuse reflectance infrared transform spectroscopy (DRIFT) measurements were performed through their exchangeable sampling modules.

### Moisture content analysis

In an uncapped 5 mL vial, 50 mg of sample was weighed and introduced in the oven at 70°C during 16h. After that time, the vial was taken out of the oven and the amount of water absorbed by the material was measured by the direct weighting of the vial after specific time intervals. Moisture absorption M(t) was determined by the weight gain relative to the samples' dry weight. The moisture content of a sample was computed following this equation M(t) = [Wt ―W₀)/W₀]× 100, where Wo and Wt denote the dry weight of the sample and the weight at time t, respectively.

### Size distribution and Zeta-potential measurements

Dynamic light scattering (DLS) measurements were performed using a ZetaMaster S ZEM5002 instrument, quartz cells with a path length of 1 cm and a laser wavelength of 670 nm. Electrophoretic mobility and Z-potential measurements were made in a ZetaSizer Nano-Z ZEN2600 instrument, DTS1070 cell type and laser wavelength of 632.8 nm. Zeta potential values were obtained through the Helmholtz-Smoluchowski model. Samples were prepared at 0.5% w/w, dispersing 50 mg of the powder and making up to weight with distilled water. Three vials per sample were prepared, adjusting the pH (4, 7 and 10) manually under magnetic stirring with NaOH and HCl solutions. The dispersions were sonicated after preparation for 5 min to tear the aggregates. Subsequently, they were shaken and left for sedimentation for another 5 min. After this time, the supernatant was extracted, and the deposit was placed in the oven at 70 °C to estimate the representative amount of sample studied. Afterwards, the pH of the supernatants was checked, and the conductivity was set to 650 µS/cm with NaCl 0.1 M. For the electrolyte concentration study, the pH was not adjusted. Beforehand, a calibration line was stablished between [NaCl] and the conductivity, to estimate the electrolyte concentration. Samples were shaken vigorously prior to their insertion into the measuring devices. Equilibration time was set to 120 s. Average results were obtained from 5 measurements for DLS, and 9 for electrophoretic mobility.

### Optic and fluorescence micrograph analysis

Optic and fluorescence micrograph analysis were carried out with a Nikon Eclipse Ti-E motorized inverted microscope equipped with objectives: Plan Fluor 10x, Plan apochromatic 20x, 40x, 60 oil, a transmission detector and a motorized epi-fluorescence module.

### Karl Fisher titrations

The water content was measured with a moisture analyzer coulometer according to Karl Fischer, brand METROHM model 899 coulometer, manufacturer Metrohm AG CH -9100 Herisau (Switzerland).

### - Characterization Data of Ligand 1

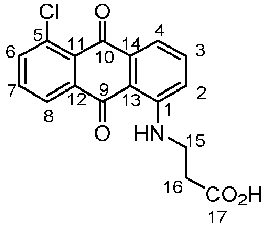

### 3-((5-Chloro-9,10-dioxo-9,10-dihydroanthracen-1-yl)amino)propanoic acid (1):

**Mp (⁰C):** 180-182 °C.

**¹H NMR (300.13 MHz, [D₆]DMSO):** δ (ppm) 9.52 (t, *J=* 5.0 Hz, 1H, NH), 8.13 (dd, *J=* 7.0, 1.9 Hz, 1H, H6), 7.80-7.70 (m, 2H, H7, H8), 7.60-7.55 (m, 1H, H3), 7.29 (d, *J=* 7.3 Hz, 1H, H4), 7.19 (d, *J* = 8.8 Hz, 1H, H2), 3.55-3.50 (m, 2H, H15), 2.60 (t, *J* = 6.3 Hz, 2H, H16).

**¹³C NMR (75.48 MHz, [D₆]DMSO):** δ (ppm) 182.4 (C9), 181.5 (C10), 172.9 (C17), 150.6 (C1), 137.0 (C5), 136.4 (C7), 135.9 (C4), 135.1 (C14), 134.3 (C8), 132.9 (C12), 128.6 (C11), 126.1 (C6), 117.7 (C2), 115.2 (C3), 111.5 (C13), 38.2 (C15), 33.6 (C16).

**¹⁵N NMR (30.4 MHz, [D₆]DMSO, via gHMQC):** δ (ppm) -314.2.

**IR (ATR):** υ 3277 (N-H), 2922 (CH₂), 1697 (C=O), 1669 (C=O), 1626 (C=C), 1591 (C=C), 1571 (C=C), 1259 (C-N), 706 (C-Cl) cm⁻¹.

**Elemental analysis** calcd. for C₁₇H₁₂CINO₄: C, 61.9; H, 3.7; N, 4.25, found: C, 62.9; H, 4.2; N, 4.01.

### Results and discussion

The anthraquinonic ligand was synthesized from starting materials following a modified reported procedure as it is mentioned in the experimental section. Importantly, we were able of scaling-up the reaction up to 10 grams without erosion of the final yield and in all the assays the non-reacted *bis*-chloroanthraquinone was always recovered. Its characterization was completed by means of two-dimensional NMR and X-ray crystallography. A key identifying feature in the ¹H NMR spectra of the ligand is the presence of a broad triplet NH resonance at δ_{H} 9.52 ppm, due to hydrogen-bonding with the C=O moiety, together with two multiplets, both associated with the ethylenic bridge at δ_{H} 3.53 and 2.60 ppm.

The ¹³C NMR spectrum could distinguish between the hydrogen-bonded and non-bonded carbonyls with signals at δ_{C} 182.4 (C9) and 181.5 (C10) ppm, respectively. ¹H,¹⁵N gHMQC experiments allowed the location of the nitrogen at δ_{N} -314.2 ppm which could be used as a probe to monitor in certain applications.

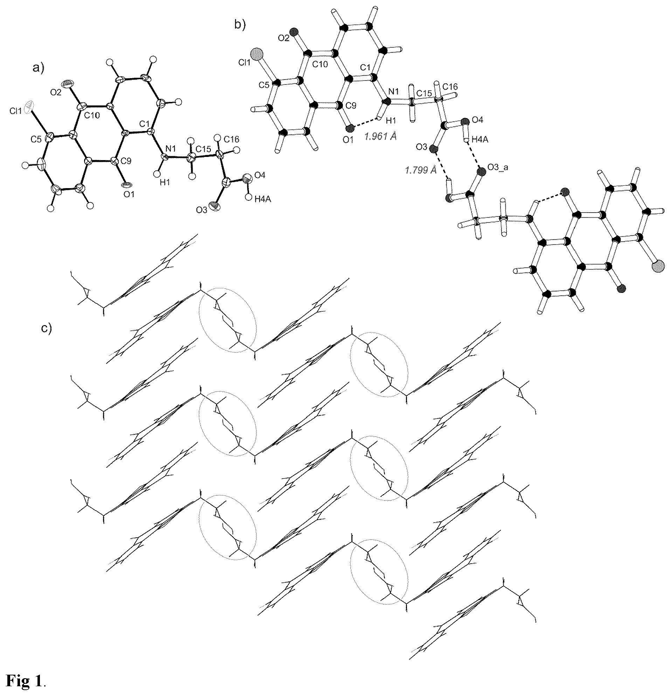

Suitable crystals of **1** for X-ray crystallography were obtained by slow DMSO evaporation of a saturated solution at room temperature. The molecular structure in the solid state confirms the chelating strength of the ligand evidenced by the intramolecular hydrogen bond between NH and C=O (quinone) of distance 2.640(9) Å. This N-H proton was found in the Fourier difference map and this interaction produces a slightly longer carbonyl bond (C9-O1, 1.245(7) Å) than the one non-hydrogen bonded (C10-O2, 1.222(7) Å). As expected, the intramolecular hydrogen bond interaction is slightly out of the anthraquinonic plane as it is deduced by the small torsion angle of 3.12⁰ for H1-N1-C9-O1. In the crystal network, anthraquinone moieties of 1 are oriented in a face-to-face manner with an interplanar distance of *ca.* 3.340 Å, establishing dimers by π-stacking in opposite directions and thanks through intermolecular hydrogen bonds of 2.699(9) Å between carboxylic groups (see Figure 1). This interaction induces architecturally controlled self-assembly, leading to molecular aggregates in the solid state. Some perspectives and stacking views of the crystal structure of 1 are shown in Figure 1.

As mentioned initially, APTMS was attached on the olive stone by the "grafting to" approach. The chemical composition of olive stone is rich in hydroxyl groups which can be used for the incorporation of a variety of functional groups such as trimethoxysilanes. The addition of APTMS in toluene under reflux resulted in the new silanized material OS@Silanized as explained in the experimental section. After filtration, the new solid was successively washed with dichloromethane, methanol and acetone, and used in the amidation procedure with ligand **1** in a mixture of *N*-(3-dimethylaminopropyl)-*N'*-ethylcarbodiimide hydrochloride (EDC) and *N*-hydroxysuccinimide (NHS) in PBS solution (Scheme 1).

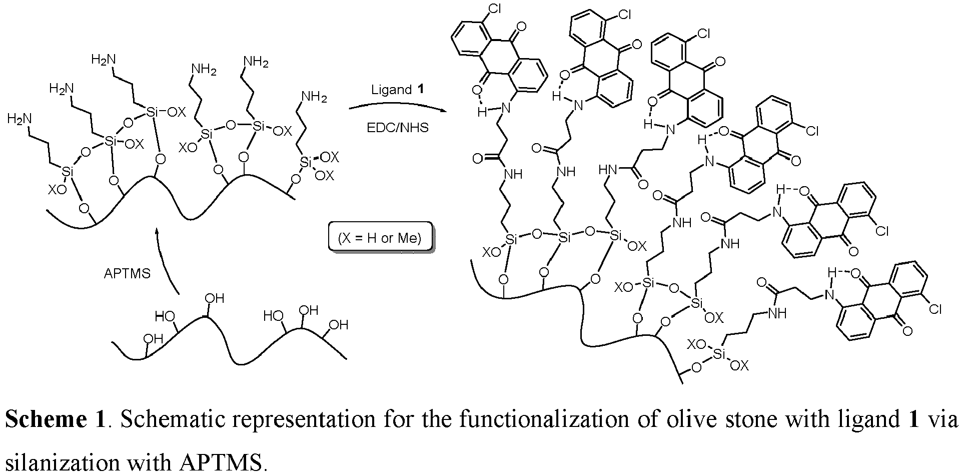

The new catalytically-active material was first conducted to elemental analysis in order to corroborate at least the presence of elemental nitrogen coming from the new anchored anthraquinone molecule. The presence of 44.27-44.88 % of C, 5.87-6.14 % of H and 0.78-0.86% of N validated the amidation procedure (Scheme 1). Furthermore, the concentration of anthraquinone grafted on the silanized olive stone material was also calculated by NMR analysis of the mother liquors after the amidation process took place. Using TSP (3-(trimethylsilyl)propionic-2,2,3,3-*d*₄ acid sodium salt) as internal standard the concentration of non-anchored ligand was obtained and by difference a 23.9 ± 1.2% of the initial amount of ligand used for the amidation process was covalently attached, which correspond to a 0.8% N, that agreed well with the elemental analysis mentioned earlier. These values are key for mole calculations in the catalytic studies that are described further below.

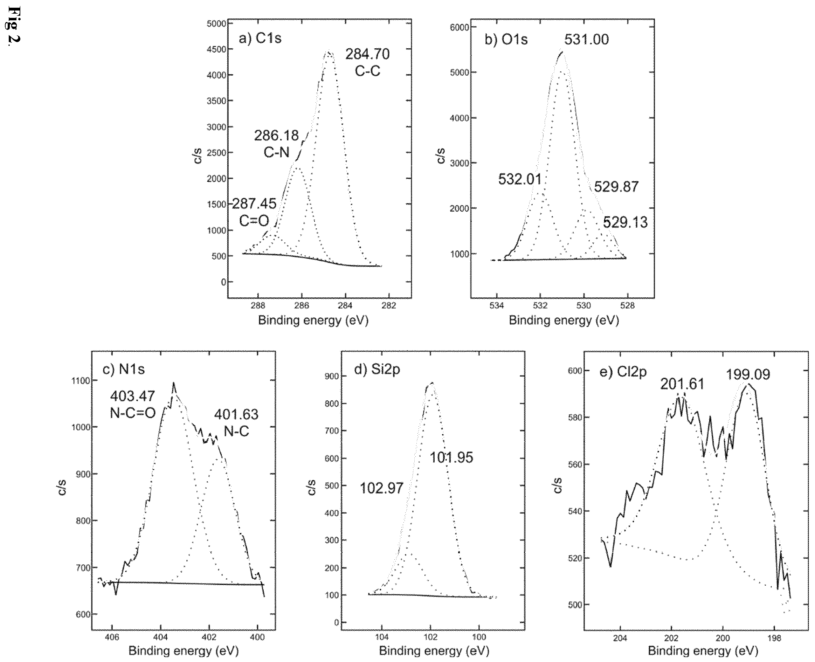

Amide formation was verified through XPS signal deconvolution and fluorescence micrograph analysis. The XPS survey scan of OS@AQ indicates the presence of C1s (58.2%), N1s (4.8%), O1s (27.4%), Si2p (6.3%), and C12p (0.3%). On the contrary, the XPS survey of native OS only shows the bands associated with C1s (64.8%) and O1s (35.2%). Figure 2 highlights the C=O, C-N and C-C bands located at binding energies of 287.45 (8.8%), 286.18 (22.2%), and 284.70 eV (69.0%), respectively. The contribution at 286.18 eV was assigned to the C-N moiety of the initial silane. The contribution at higher binding energy was assigned to the presence of carbonyl groups from amide moieties. Here, the area of C=O of OS@AQ is higher (22.2%) compared with that of the native olive stone (9.0%). This confirms the successful incorporation of AQ-COOH molecules. Interestingly, the OS shows bands associated to C-O and C-C, whereas OS@AQ shows bands for C-N and C-C. The N1s core level signal for OS@AQ (Figure 2c) is asymmetric and contains contributions at 401.63 eV (27.1%) and 403.47 eV (72.9%), assigned to N-C and N-C=O, respectively. Again, this band is diagnostic of functionalization since it is absent in the native material. Finally, Figure 2e presents the C12p XPS photoemission features. The chlorinated AQ in OS@AQ give rise to C12p3/2 and C12p1/2 lines centered at 199.09 and 201.61 eV, respectively. The presence of this band corroborates than in the final material the AQ amidation occurred adequately, and therefore confirms the homogenously coverage of the olive stone with the target redox-active probe.

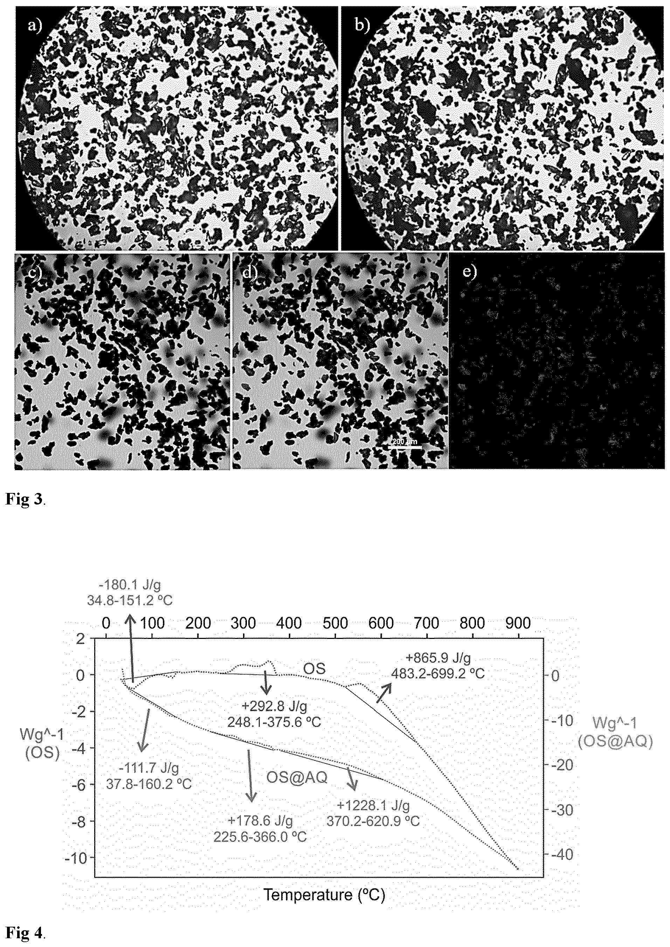

Further evidence for the presence of anthraquinone 1 on these material was provided by optic and fluorescence micrograph analysis (Figure 3). We characterized the localized emission from anthraquinone structures excited with a 458 nm laser line. Figure 3c-e show fluorescence micrographs for the final material and as expected, total absence of fluorescence emission was observed for untreated olive stone. On the contrary, the detected emission coming from the functionalized material was evident and revealed a homogeneous distribution of anthraquinoid **1.**

TGA and DTG analysis were performed on both original olive stone and AQ-functionalized material. The evolution in the sample mass and in its decomposition rate when gradually heated under inert atmospheric conditions were studied and confirmed their high stability within temperature and probably more important, their possible use in processes in where it is important to heat such as in the thermoplastic or thermostable fields. The plots show two areas of weight loss. The first one, at temperatures below 100 °C, describes the volatilization of moisture, physically bound water, and highly volatile organic products, representing 5.8, and 4.9 wt. %, for OS and OS@AQ, respectively, of the original sample mass. The second area takes place at temperatures centered at 330 and 328°C for OS and OS@AQ, respectively, which are associated with the thermal degradation of the polymeric constituents of hemicellulose and cellulose. The degradation of the carbohydrate polymers is followed by a progressive reduction in the sample mass at temperatures between 400 and 600 °C attributed to the thermal degradation of lignin. The percentage of mass dropped during this interval corresponded to 72.5 and 66.8 %, for OS and OS@AQ, respectively, representing a significant contribution to the overall weight of the sample. On the contrary, the relatively low sample mass losses observed at temperatures above 720 °C are probably due to thermal degradation of resilient lignin structures, volatilization of heavy tars and formation of volatile products as a result of progressive carbonization of the solid fraction.

The calorimetric behavior was also analyzed in order to see if the functionalization could modify the endothermic and exothermic reversibility. As can be seen in Figure 4, DSC thermograms corresponding to both native and AQ-functionalized materials showed a first endothermic dip and two exothermic peaks. The first dip (endothermic) and the second peak (exothermic) seems to be due to the presence of bound moisture that would evolve upon heating and also to hemicelluloses degradation, respectively.^{xvi} The third peak (exothermic) can be attributed to lignin degradation to volatile compounds. Interestingly, the second and third peaks all together are slightly higher in the OS@AQ (1406.7 J/g) than in the OS (1158.7 J/g) which is probably due to organic compounds degradation that could be associated to the silanized-anthraquinoid moieties. Except for the latter, thermograms associated to both systems can be considered similar, and hence, any other change can be discarded.

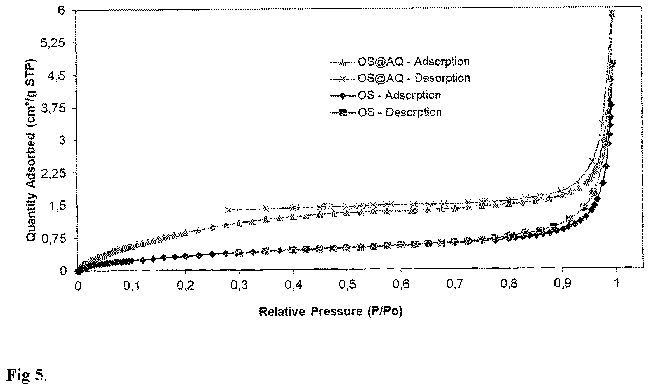

The nitrogen gas adsorption-desorption isotherms of native olive stone and functionalized OS@AQ at 77 K are given in Figure 5.

In the IUPAC, graphs expressed according to adsorption characteristics are classified from type I to type V according to their shaped.^{xvii} The nitrogen adsorption isotherms in Figure 5 corresponds to a type II curve, that mainly appears in porous solids with micropores, and it can be seen that an inflection point appears when the pressure is low. The inflection point occurred in the range of relative pressure less than 0.1 in both native OS and functionalized OS@AQ materials and indicates the formation of monolayer adsorption. In both cases there is an insignificant increase in adsorption, and a flat isotherm in the range of 0.2 to 0.8 relative pressure. These results evidenced some mesopores as it is shown below. The N₂-isotherms show a small hysteresis shape in the desorption curves, verifying the presence of mesopores with the possible occurrence of a capillary condensation phenomenon in both cases. The average pore diameter of native OS and AQ-functionalized OS were determined to be 59.1 and 29.1 Å, respectively, suggesting a clear occupation of the pores by the new redox-active layer. In this sense, the specific surface micropores areas were 0.4509 and 2.1792 which again verifies the silanization process and further amidation of the AQ positively occurred. Table 1 summarizes these values together with the overall BET surface area, external area and micropore volume for both OS and OS@AQ samples.

**Table 1. Main surface properties of olive stone with and without AQ functionalization.**

| | OS | OS@AQ |
|---|---|---|
| BET surface area (m²/g) | 1.3975 | 4.1731 |
| Micropore area (m²/g) | 0.4509 | 2.1792 |
| External surface area (m²/g) | 0.9466 | 1.9939 |
| Micropore volume (cm³/g) | 0.000157 | 0.000734 |
| Pore diameter (Å) | 59.1 | 29.1 |

As aforementioned, the use of lignocellulosic materials as thermoplastic or thermostable fillers could be envisaged, although their sensitivity to water is probably one of their major drawbacks. Silanization and further anchoring of organic moieties could be a useful strategy to reduce their tendency to capture water which eventually would affect their mechanical performance as well as their long-term durability. Water uptake as a function of exposure time is shown in Figure 6. The moisture absorption M(t) expressed as a function of weight gained after being 16 h at 70 °C in the oven, is given in Figure 6. In the three materials the content M(t) rapidly increases at the first stage of the absorption and then gradually slowed down until the equilibrium water uptake was reached. The initial rates are in all the cases in the range of 0.75-0.79 s⁻¹ evidencing that the hydration mechanisms of the anhydrous materials are the same fulfilling the mesopores and surface cavities of the materials in the initial part of the process. As a function of time, it is apparent that in less than an hour the functionalized materials reach their equilibrium state, i.e., 58 min for OS@Silanized and 52 min the OS@AQ, whereas the native OS needed 30 h (1800 min) to reach the original equilibrium state. It is worth mentioning that both silanization and further AQ-functionalization significantly reduced the equilibrium water uptake, which agrees well with results noted for wood-based lignocellulosic fibers.^{xviii} Actually, as shown in Figure 6, the maximum water absorption amount decreased from about 12.6% in the native OS to 7.5% or to 7.0% for OS@Silanized and OS@AQ, respectively. This significant reduction might be attributed to the better wetting of the OS particles compared to those in where the organic entities have been covalently attached to the particles surface reducing the water accumulation within the interfacial voids. These reduced water uptakes that our anthraquinone-functionalized material is able to manifest allowed him to represent one of the first redox-active lignocellulosic materials potentially usable in composite materials overcoming all the problems derived from the excess humidity that non-derivatized lignocellulosic material usually have.

In agreement with moisture kinetics, Karl-Fisher titrations at the equilibrium water uptake were carried out revealing concentrations of 10.3 ± 0.1, 8.4 ± 0.2 and 4.5 ± 0.1% for OS, OS@Silanized and OS@AQ, respectively. The surface chemistry characterization of OS@AQ was finally accomplished by FTIR spectroscopy and DLS electrophoretic mobility measurements. The ATR and DRIFT spectra of raw olive stone waste illustrates the complex chemical composition and revealed active functional groups such as carbonyl and hydroxyl groups of the lignocellulosic material. The wide transmittance band in the 3350-3330 cm⁻¹ range can be assigned to O-H stretchings. The width of this band indicates the presence of strong hydrogen bonds and in the diffusive reflectance measurements this bands appear stronger in intensity as two overlapped signals located at 3473 and 3329 cm⁻¹. The region between 2922 cm⁻¹ and 2876 cm⁻¹ is assigned to Csp³-H bonds. Interestingly, in the AQ-amidated material this signal is shifted to higher frequency up to 2974 cm⁻¹, probably due to the presence of the new anthraquinonic moiety. The peak at 1730 cm⁻¹ on the OS spectrum can be assigned to the C=O moieties whether from ketone or ester groups, since a strong peak at 1233 cm⁻¹ corresponding to the extension vibration of these compounds is also present. The carbonylic band, again in the diffusive reflectance spectra, appears strongest in the native OS material, whereas in the functionalized materials appears with lower intensity. The presence of OH and C=O bonds corroborates why OS has been previously used as metal adsorbents since via hydrogen bonding could significantly interact retrieving metal wastes.^{xix} All the samples exhibited peaks at 1595 cm⁻¹ which can be assigned to the asymmetric stretching of the carboxylic C=O double bond, and peaks around 1457-1421 cm⁻¹ which can be attributed to the C-O bond in carboxylic groups. The peaks at 1505 and 1457 cm⁻¹ may be due to the presence of aromatic rings or C=C olefinic bonds. Some peaks in the 1370-1325 cm⁻¹ are difficult to be attributed but could be assigned to C-O stretching in O-C=O structures, the deformation vibration of surface hydroxyl groups, also to C-N of amides or even deformation of C-H bonds. The strongest peak of the spectrum in the three systems is located at 1028 cm⁻¹ and it is caused by C-O stretching bands. The silanized material shows a sharp signal at 488 cm⁻¹ due to rocking of Si-O bonds, which is weaker in the amidated material and is absent in the native OS.

Zeta potential defined as the electric potential in the interfacial double layer at the location of the slipping plane relative to a point in the bulk medium,^{xx} was used as an indirect estimation of the surface charge density of the three systems under study. The zeta potential helps to unravel repulsive interactions between colloidal particles and the tendency of agglomeration. Emulsions with high zeta-potential (-/+) are electrically stable, whereas emulsions with low zeta-potential (-/+) tend to coagulate or flocculate. In any case, it is important to point out that zeta potential is related to the electrophoretic mobility which is indeed the property that is physically measured. The Henry equation allowed the calculation of the zeta-potential knowing the electrophoretic mobility, the relative permittivity of the medium, the dynamic viscosity of the medium, the reciprocal of the double layer thickness (k) and the radius of the particle (α) assuming a spherical shape. The Smoluchowski approximation (k × α = 1.5) applied herein, is only valid for aqueous media with moderate electrolyte concentrations (10⁻³ molar salt) and non-conducting spherical particles with diameters higher than 100 nm.

DLS measurements indicated that colloids of average diameter in the range of 4500 to 5700 nm were dominant in aqueous suspensions of our materials at pH of 4, 7 and 10, indicating that the size of the particles in the supernatant was not affected by the surface charge and the overall contribution of the electrostatic repulsion is not enough to divide or aggregate the lignocellulosic material. It should be noted that the sedimentation occurring during the preparation is also an indicator of the broad size distribution of the whole sample. In this work, only the electrical surface properties of the stable fraction of the material were studied, considering it as a representative portion of the entire material.

Electrophoretic mobility measurements are based on the comparative phase analysis of the light scattered from the colloidal dispersion and a well-known frequency reference beam.^{xxi} Inspection of the behavior of the electric double layer depending on the electrolyte concentration, i. e. sodium chloride, was done over the native OS (Figure S22). A maximum of potential and mobility was observed between 0.5 and 1.0 mM of NaCl, corresponding to conductivity values between 106 and 486 µS/cm. Conductivity in the three systems studied (OS, OS@Silanized and OS@AQ) was set to 650 µS/cm, which is equivalent to a concentration of 17 mM NaCl. Negative values of zeta-potential suggest that the materials are surrounded by a well-organized layer of hydrogen-bonded water molecules (a stable hydrophilic shell) which promoted a negative surface charge and prevented interaction with similar neighboring molecules. This fact is produced at pH 10 in the three systems under study. At pH 7 the zeta-potential of the native OS remained almost unchanged with a slight reduction from -23.6 ± 0.6 down to -21.4 ± 0.6 mV, but in the case of the silanized and AQ-functionalized materials the zeta-potentials were reduced from -23.5 ± 0.2 to -21.4 ± 0.6 and from -23.5 ± 0.4 down to -6.5 ± 0.4 mV, respectively (Figure 7). The variation of z-potential at different pH values could be observed in Figure 7 and Table S2.

Interestingly, the catalytically-active material is the one that dropped down more drastically, i.e., 17.0 mV of reduction, whereas the native system only diminished its zeta potential about 2.2 mV. At pH 4, the native OS remained with a significant negative charge of -17.1 mV, while the other two are now positively charged with values of 28. 8± 0.5 and 15.6 ± 0.6 mV for the silanized and the AQ-functionalized, respectively. This fact is probably related to the potentially protonable moieties present in these systems that are absent in the lignocellulosic OS material. Interestingly the point of zero charge is not achieved in the native OS at any of the assayed pH values, but in the case of both silanized and AQ-functionalized these points are reached between 4-5 and 5-6 of pH, respectively.

Cyanohydrins are a very important class of compounds widely used in the synthesis of many intermediates for organic compounds, thanks to the great versatility of the nitrile group. In fact, they have been employed in the synthesis of substituted oxazolidinones by sequential conversion to their respective chloroformates, that treated with hydrazine produces the carbazates that after cyclization produce the desired compounds, some of them with important fungicidal properties.^{xxii} Other useful intermediates are α-hydroxy acids, α-hydroxy aldehydes, or β-amino alcohols.^{xxiii} For the synthesis of cyanohydrins, one efficient method that has received great attention is the cyanosilylation of carbonyl compounds with trimethylsilyl cyanide (TMSCN) which is used for the formation of C-C bonds in organic synthesis with high atom economy and without byproducts or side reactions.^{xxiv} Several efficient catalysts have been extensively investigated so far, such as Lewis acid catalysts, nucleophilic catalysts (such as amines, phosphines, iminophosphoranes and alkaline-earth metal oxides), but the vast majority of the studies, the reaction is catalyzed by homogeneous catalysts, in which separation difficulties and recyclability hamper the process. With the aim of solving these drawbacks, heterogeneous catalysis is presented as a very interesting alternative to this problem.^{xxv} To the best of our knowledge, the use of olive stone in catalysis has been only produced by means of their transformation into carbons^{xxvi} or biochars,^{xxvii} but no application of the non-carbonized residue has been described so far. In this regard, we report herein the first application of a functionalized olive-stone in the cyanosilylation reaction of benzaldehyde (2) (Table 2).

The catalytic process was tested without catalyst (entry 1) observing the formation of only 4% of the final product after 15h of reaction. When the native OS was tested as catalyst the conversion afforded was of 74%, indicating that the olive stone surface presents active sites of Lewis acid nature able of catalyzing the process (entry 2). With the antraquinoic ligand anchored on the material and also with the silanized ligand the reaction proceeds with 85% conversion without the use of any solvent (entry 4), suggesting that the functionalization improves the yield of the reaction. Furthermore, the reaction was tested with different solvents (entries 5-9) obtaining worse results than when the reaction was performed without any solvent.

**Table 2. Heterogeneous organocatalytic cyanosilylation of benzaldehyde.^{a}**

| 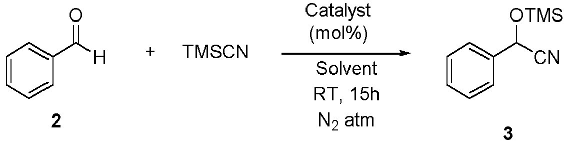 | | | |
|---|---|---|---|
| Entry | Catalyst (10 mg) | Solvent (0.5 mL) | Conversion (%)^{b} |
| 1 | - | - | 4 |
| 2 | OS | - | 74 |
| 3 | OS@Silanized | - | 85 |
| 4 | OS@AQ | - | 85 |
| 5 | OS@AQ | PhMe | 18 |
| 6 | OS@AQ | DCM | 79 |
| 7 | OS@AQ | THF | 71 |
| 8 | OS@AQ | MeCN | 65 |

| | | | |
|---|---|---|---|
| ^{a} Reaction carried out using substrate **2** (25 µL, 0.25 mmol) and TMSCN (34 µL, 0.275 mmol, 1.1 equiv.) under inert N₂ atmosphere at room temperature during 15h. ^{b} Conversions (relative to aldehyde **2**) were determined by ¹H NMR of the reaction crude. | | | |

Once the optimal reaction conditions were obtained, the recyclability of the active materials OS and OS@AQ were studied. On this study, we could observe that after the first cycle, the activity of both systems was greater than the first cycle, i.e. 99% for OS and 92% for OS@AQ, what could suggest that the adsorbed water already present before the first cycle could destroy some of the TMSCN employed, and this is why in the second cycle the amount of added TMSCN was enough to perform the reaction explaining the higher conversions. To verify the latter statement, we studied the kinetic profile with 1.1 and 2.0 equivalents of TMSCN for both OS and OS@AQ (Figure 8). As it is observed, within the optimal conditions the reaction proceeds faster when OS@AQ was used as organocatalyst obtaining in only 5 minutes of reaction a 69% of conversion. On the contrary, the native OS required about 60 minutes to afford a 60% of conversion The analysis of the resulting crudes by ¹H NMR spectroscopy showed that no traces of TMSCN remained in the reaction crudes further proving its hydrolysis probably by action of the adsorbed water. When the same kinetic profiles were performed with an excess of 2.0 equivalents of TMSCN, both reaction reached completeness but again, much faster with the functionalized OS than with the native material (Figure 8).

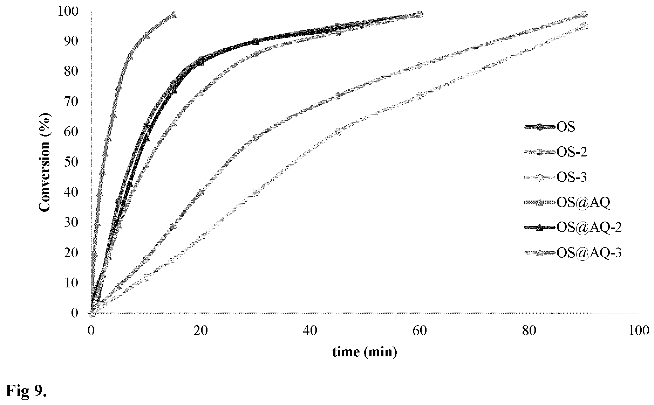

The kinetic profile was studied further during the first three recyclability cycles in both materials, and it is evident how in all the cases the conversion was >99% in all the cases, but importantly, when the anthaquinoid-functionalized material is employed the reaction proceed faster in the three cycles (Figure 9). The overall conversion obtained during the first 10 minutes of reaction in these 3 cycles was 31% for OS and 66% for OS@AQ, corroborating that the functionalization of the surface with the anthraquinoid moiety has improved its performance in this specific catalysis. Furthermore, the recyclability of the material could be corroborated with the use of 2.0 equivalents of TMSCN.

The TOF of both materials was also calculated at different conversions on the first cycle of the reaction. At 40% of conversion the TOF values for OS and OS@AQ were of 389 and 1404 h⁻¹, respectively.

### 4. Conclusions

The results showed that olive stone can be silanized and efficiently functionalized with an anthraquinoid entity probing its performance as the first example of non-carbonized olive stone active in organocatalysis, and specifically in the cyanosilylation reaction of carbonylic compounds. The new valorized agri-food waste has been physicochemically characterized by a multiplatform approach including elemental analysis, thermogravimetry, differential scanning calorimetry, surface area, pore size distribution, X-ray photoelectron spectroscopy, infrared spectroscopy (ATR and DRIFT), moisture content, Karl-Fisher, size distribution, zeta-potential and optic and fluorescence microscopy. The relatively low percentage of water that the anthraquinone-functionalized material is able to adsorb, make it one of the first lignocellulosic valorized materials potentially useful in composite thermoplastics or thermostable applications. In addition, the distinct electrophoretic mobility found as a function of pH, makes this new material useful in potential luminescence and/or sensor applications.

### References

1 Martin-Lara, M. A.; Hernáinz, F.; Calero, M.; Blázquez, G.; Tenorio, G. Surface chemistry evaluation of some solid wastes from olive-oil industry used for lead removal from aqueous solutions. Biochem. Eng. J. 2009, 44, 151-159.
1 Gonzalez, J. F., Gonzalez-Garcia, C.M., Ramiro, A., Gonzalez, J., Sabio, E., Gañán, J., Rodriguez, M.A., 2003. Combustion optimisation of biomass residue pellets for domestic heating with a mural boiler. Biomass Bioenergy 27, 145-154.
1 Budinova, T., Petrov, N., Razvigorova, M., Parra, J., Galiatsatou, P., 2006. Removal of arsenic(III) from aqueous solution by activated carbons prepared from solvent extracted olive pulp and olive stones. Ind. Eng. Chem. Res. 45, 1896-1901.
1 Dawson, D., 2020. Available from http://www.dennisdawson.com/ industry.htm.
1 Cosmoliva, 2020. Available https://www.cosmoliva.com/.
1 Naghmouchi, I.; Mutje, P.; Boufi, S. Olive stones flour as reinforcement in polypropylene composites: A step forward in the valorization of the solid waste from the olive oil industry Ind. Crops Prod. 2015, 72, 183-191.
1 Kakou, C. A., Arrakhiz, F.Z., Trokourey, A., Bouhfid, R., Qaiss, A., Rodrigue, D. (2014). Influence of coupling agent content on the properties of high-density polyethylene composites reinforced with oil palm fibers. Materials and Design, 63: 641-649. http://dx.doi.org/10.1016/j.matdes.2014.06.044
[14] Singha, A.S., Raj, R.K. (2012). Natural fiber reinforced polystyrene composites: Effect of fiber loading, fiber dimensions and surface modification on mechanical properties. Materials and Design, 41: 289-297. http://dx.doi.org/10.1016/j.matdes.2012.05.001
1 [15] Asumani, O.M.L., Reid, R.G., Paskaramoorthy, R. (2012). The effects of alkali silane treatment on the tensile and flexural properties of short fibre non-woven kenaf reinforced polypropylene composites. Composites: 0102030140160180200220240260 Young modulus (MPa)Filler content (%) FUT FST 379 Part A, 43(9): 1431-1440. http://dx.doi.org/10.1016/j.compositesa.2012.04.007
[16] Merkel, K., Rydarowski, H., Kazimierczak, J., Bloda, A. (2014). Processing and characterization of reinforced polyethylene composites made with lignocellulosic fibres isolated from waste plant biomass such as hemp. Composites: Part B, 67: 138-144. http://dx.doi.org/10.1016/j.compositesb.2014.06.007
1 [18] Xie, Y., Callum, A.S.H., Xiao, Z., Holger, M., Carsten, M. (2010). Silane coupling agents used for natural fiber / polymer composites: A review. Composites: Part A, 41(7): 806-819. http://dx.doi.org/10.1016/j.compositesa.2010.03.005
[19] Abdelmouleh, M., Boufi, S., Belgacem, M.N., Dufresne, A. (2007). Short natural fibre reinforced polyethylene and natural rubber composites: Effect of silane coupling agents and fibres loading. Composites Science and Technology, 67(7-8): 1627-1639. http://dx.doi.org/10.1016/j.compscitech.2006.07.003
1 D. Gibson, I. Binyamin, M. Haj, I. Ringel, A. Ramu, J. Katzhendler, Anthraquinone intercalators as carrier molecules for second-generation platinum anticancer drugs, Eur. J. Med. Chem. 32 (1997) 823-831. https://doi.org/10.1016/S0223-5234(99)80068-3.
[¹] A. Bruker, Inc. APEX2 (Version 1.08), SAINT (Version 7.03), SADABS (Version 2.11), SHELXTL (Version 6.12), Bruker Advanced X-ray Solutions, Madison, Wisconsin, USA, 2004.
[¹] G. Sheldrick, SADABS, Program for Empirical Absorption Correction of Area Detector Data, University of Göttingen, Göttingen, Germany, 1996.
[¹] A. Altomare, M.C. Burla, M. Camalli, G.L. Cascarano, C. Giacovazzo, A. Guagliardi, A.G.G. Moliterni, G. Polidori, R. Spagna, SIR97: a new tool for crystal structure determination and refinement, J. Appl. Crystallog. 32 (1999) 115-119.
[¹] (a) G. M. Sheldrick, Program for Crystal Structure Refinement, University of Göttingen, Göttingen, Germany, 2014; (b) L. J. Farrugia, WinGX suite for small-molecule single-crystal crystallography, J. Appl. Crystallog. 32 (1999) 837-838.
[¹] Dolomanov, O.; Bourhis, L.J.; Gildea, R.; Howard, J.A.; Puschmann, H. OLEX2: A complete structure solution, refinement and analysis program. J. Appl. Crystallogr. 2009, 42, 339-341.
1 Yang, H., Yan, R., Chen, H., Lee, D.H., Zheng, C., 2007. Characteristics of hemicellulose, cellulose and lignin pyrolysis. Fuel 86 (12-13), 1781-1788. https://doi.org/10.1016/j.fuel.2006.12.013.
1 H. Yang, R. Yang, H. Chen, L.D.H. Zheng, Fuel 86 (2007) 1781.
1 Arbelaiz, A., Fernandez, A., Raunes, J.A., Retegi, A., Llano-Ponte, R., Mondragon, I., 2005. Mechanical properties of short flax fibre bundle/polypropylene composites: influence of matrix/fibre modification, fibre content, water uptake and recycling. Compos. Sci. Technol. 65, 1582-1592
1 Gao, Y.; Aliques Tomas, M. C.; Garemark, J.; Sheng, X.; Berglund, L.; Li, Y. Olive Stone Delignification Toward Efficient Adsorption of Metal Ions. Front. Mater. 2021, 8, 605931. doi: 10.3389/fmats.2021.605931.
1 Hunter, R. J. Zeta Potential in Colloid Science: Principles and Applications, 1st ed.; Academic Press: London, UK, 1981; pp. 11-121.
1 Miller JF, Schätzel K, Vincent B (1991) J Colloid Interface Sci 143:532.
1 Sternberg, J. A.; Adams, J. B. EP0503798A1_Original_document_20210421152633.Pdf. 1992, p 120.
1 Y. Kikukawa, K. Suzuki, M. Sugawa, T. Hirano, K. Kamata, K. Yamaguchi and N. Mizuno, Angew. Chemie - Int. Ed., 2012, 51, 3686-3690
1 R. J. H. Gregory, Chem. Rev., 1999, 99, 3649-3682.
1 Ertl, G., Knözinger, H., Weitkamp, J., Eds. Handbook of Heterogeneous Catalysis; Wiley-VCH: New York, 1997
1 R. Estevez, L. Aguado-Deblas, V. Montes, A. Caballero, F.M. Bautista. Sulfonated carbons from olive stones as catalysts in the microwave-assisted etherification of glycerol with tert-butyl alcohol. Molec. Catalysis 2020, 488, 110921.
1 E. Magioglou, Z. Frontistis, J. Vakros, I. D. Manariotis, D. Mantzavinos. Activation of Persulfate by Biochars from Valorized Olive Stones for the Degradation of Sulfamethoxazole. Catalysts 2019, 9, 419

## Claims

1. A process to obtain a silane-functionalized material by a process comprising:
a. carrying out a silanization process of the hydroxyl groups on the surface of a non-carbonized lignocellulosic material derived from olive stone comprising hemicellulose and lignin with an organofunctional alkoxysilane molecule.

2. A process to obtain an anthraquinone-functionalized material by a process comprising:
b. carrying out an amidation procedure of the silanized material obtain in step a) of claim 1 and forming a covalent fixation of an anthraquinoid molecule to the silanized material obtained after carrying out the amidation procedure, resulting in the anthraquinone-functionalized material.

3. The process of any of claims 1 or 2, wherein the silanization process of step a) is carried out, in the presence of an organic solvent such as halogenated and non-halogenated organic solvents, by adding to, preferably a stirred suspension, of a non-carbonized lignocellulosic material derived from olive stone present in the said organic solvent, an organofunctional alkoxysilane molecule at a temperature from 20 to 250 °C and at reaction times from 2 to 24h, and then preferably allowing the reaction to cool and optionally filtering washing, and/or drying so as to obtain the reaction product.

4. The process of claim 3, wherein the organic solvents are selected from the list consisting of toluene, dichloromethane, chloroform, tetrahydrofuran, ethanol, dimethylformamide, and acetonitrile; the temperature range is from 60 to 120 °C, and the reaction times are in the range of from 4 to 5h.

5. The process of any of claims 2 to 4, wherein the amidation procedure of step b) is carried out by adding to an organic solution comprising the anthraquinoid molecule a mixture of a carbodiimide such as *N*-(3-dimethylaminopropyl)-*N*-ethylcarbodiimide hydrochloride (EDC) and an *N*-hydroxide derivative such as *N*-hydroxysuccinimide (NHS) in a buffered solution, preferably stirring the mixture during 1-2h at room temperature (25°C), and simultaneously or subsequently adding the silanized material resulting from step a), preferably bystirring at room temperature (25°C) during 16-24h, and optionally filtering, washing and/or drying to obtain the reaction product.

6. The process of any of claims 1 to 5, wherein the silanization process is carried out by using an organofunctional alkoxysilane molecule selected from the group consisting of 3-aminopropyltriethoxysilane (APTES), 3-aminopropylmethyldiethoxysilane (APMDES), 3-aminopropyldimethylethoxysilane (APDMES), 3-Chloropropylmethyldiethoxysilane, Aminoethylaminopropyltriethoxysilane, and Piperazinylpropylmethyldimethoxysilane.

7. The process of any of claims 2 to 6, wherein the anthraquinoid molecule is of formula I: 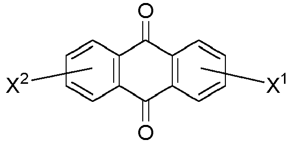 wherein
X1 is from 1 to 4 organics group in any position of the aromatic ring, wherein at least one of these groups has the general formula R' R CO2H, in where R' would be any 5 to 6 atoms heteroatom-based ring containing oxygen, sulphur or nitrogen, and R would be any branched or linear saturated or unsaturated aliphatic chain of length between 2 to 12 carbons, and wherein the rest of the organic groups may be present or absent (in which case a hydrogen would be present in that position) and, if present, may have the formula R' R; and
X2 is from 1 to 4 organics group in any position of the aromatic ring, wherein at least one of these groups has the general formula R' R CO2H, in where R' would be any 5 to 6 atoms heteroatom-based ring containing oxygen, sulphur or nitrogen, and R would be any branched or linear saturated or unsaturated aliphatic chain of length between 2 to 12 carbons, and wherein the rest of the organic groups may be present or absent (in which case a hydrogen would be present in that position) and, if present, may have the formula R' R.

8. The process of any of claims 1 to 7, wherein the organofunctional alkoxysilane molecule is 3-aminopropyltrimethoxysilane.

9. The process of any of claims 2 to 8, wherein the anthraquinoid molecule is 1-(2-aminoethylamino)-5-chloro-anthraquinone.

10. A silane-functionalized material obtained or obtainable by the process of any of claims 1, 3, 4, 6 or 8.

11. An anthraquinone-functionalized material obtained or obtainable by the process of any of claims 2 to 9.

12. A Lewis acid catalyst comprising the silane-functionalized material according to claim 10 or comprising the anthraquinone-functionalized material according to claim 11.

13. *In vitro* use of the of the catalyst of claim 12 for luminescence and/or catalytic applications.

14. Use of the catalyst of claim 12 to carry-out a reaction selected from the list consisting of: cyanosilylation reaction of carbonyl compounds, dearomatization reaction of naphtols, Diels-Alder reaction, ene-reaction, carbonyl addition reaction and Friedel-Crafts reaction.

15. Use of the silane-functionalized material according to claim 10 or the anthraquinone-functionalized material according to claim 11, as a filler in polymer based composite materials such as thermosetting or thermoset materials.
